## Europäisches Patentamt
## European Patent Office
## Office européen des brevets

(11) Veröffentlichungsnummer: **0 159 680**
**A2**

(12) # EUROPÄISCHE PATENTANMELDUNG

(21) Anmeldenummer: 85104795.1

(22) Anmeldetag: 20.04.85

(51) Int. Cl.⁴: **G 05 D 1/02**

(30) Priorität: 25.04.84 US 604215

(43) Veröffentlichungstag der Anmeldung: 30.10.85
Patentblatt 85/44

(84) Benannte Vertragsstaaten: **AT BE CH DE FR GB IT LI LU NL SE**

(71) Anmelder: **BARRETT ELECTRONICS CORPORATION,
630 Dundee Road, Northbrook, IL 60062 (US)**

(72) Erfinder: **Gagner, Mark B., 13 985 Millbank Court, Orland
Park Illinois 60462 (US)**
Erfinder: **Flynn, James A., 87 N Park Road, Lagrange
Illinois 60525 (US)**

(74) Vertreter: **Bell, Otto G. Dipl.-Ing., Mannesmann AG
Mannesmannufer 2, D-4000 Düsseldorf (DE)**

(54) **Positionsidentifizierungseinrichtung für Fahrzeugleitsysteme.**

(57) Ein Fahrzeugleitsystem, in dem Fahrzeuge entlang eines Fahrweges geleitet werden, mit einer Einrichtung zur Positionsidentifizierung, um Positionen entlang des Fahrweges zu identifizieren und eine Einrichtung zur Informationserfassung für die Richtungssteuerung jedes Fahrzeugs entlang des Streckensystems. Die Einrichtung umfasst ein Abfrageelement für jedes Fahrzeug mit einer Spule, die durch ein Hochfrequenzsignal erregt wird, und ein Beantwortungselement an jeder Haltestelle mit einem Identifikationssignalgeber zur Erzeugung eines kodierten Signals, das die Identifikationskodierung für die Haltestelle darstellt, eine zweite Spule am Fahrweg des Fahrzeuges, um eine Signalkopplung zwischen den beiden Spulen zu ermöglichen, wenn das Fahrzeug bei seiner Fahrt entlang des Fahrweges das Beantwortungselement passiert sowie eine Modulationsschaltung, die auf das kodierte Signal reagiert, um die Beantwortungsspule abwechselnd zu aktivieren und zu deaktivieren, gemäss der Informationskodierung, wobei die Induktionswirkung zwischen den beiden Spulen eine Modulation des Frequenzsignales mit der Informationskodierung, die von der Signalerfassung des Abfrageelementes erfasst werden kann, erzeugt,

## POSITIONSIDENTIFIZIERUNGSEINRICHTUNG FÜR FAHRZEUGLEITSYSTEME

Die vorliegende Erfindung betrifft ein Leitsystem, in dem mindestens 1 fahrerloses Fahrzeug entlang eines Fahrwegs zu einer vorgewählten Position geleitet wird und im besonderen eine Einrichtung, die es einem Fahrzeug ermöglicht, Informationen zur Bestimmung seiner Bewegung entlang des Fahrwegs zu erhalten.

Zur Position können auch andere Fahrzeuge, Maschinen, Fördergüter und sogar Personen gehören, die mit einer Einrichtung zur Positionsidentifizierung versehen sind.

Verschiedene Systeme sind bisher zur Leitung eines fahrerlosen Fahrzeugs entlang eines Fahrwegs vorgeschlagen worden. Im U.S. Patent 4,284,160, das für R. L. DeLiban und David Lieby ausgegeben wurde, wird ein Beispiel eines solchen Systems offenbart. Dieses Patent ist dem Abtretungsempfänger dieser Anmeldung übertragen. In diesem System wird der Fahrweg definiert durch einen stromdurchflossenen Leiter zur Ausstrahlung eines elektromagnetischen Feldes sowie durch eine Sensoreinrichtung am Fahrzeug zur Erfassung der ausgestrahlten Energie und zur Steuerung des Fahrzeugs mittels seiner Lenkeinrichtung entlang dieses Weges. Die Haltestellen - Wahleinrichtung an jedem Fahrzeug weist das Fahrzeug an, zu einer beliebigen Haltestelle von einer Vielzahl von Haltestellen zu fahren, die sich an verschiedenen Punkten entlang des Weges befinden. An jeder Haltestelle liefert eine Einrichtung zur Positionsidentifizierung ein unverwechselbares Kodierungssignal, das bei der Annäherung des Fahrzeuges an die Haltestelle von der Einrichtung zur Kodierungserfassung am Fahrzeug erfaßt werden kann, um das Fahrzeug bei der Ankunft an der gewählten Haltestelle anhalten zu können. Das System umfaßt einen Hauptfahrweg und eine Vielzahl von Nebenwegen, die an verschiedenen sogenannten Entscheidungspunkten von dem Hauptfahrweg abzweigen. Immer wenn ein Fahrzeug zu einem Entscheidungspunkt im System gelangt, wird ein von wenigstens zwei alternativen Wegen als Vorzugsweg zu einer gewählten Haltestelle ausgewählt. Zu jedem Entscheidungspunkt gehört eine Einrichtung zur Positionsidentifizierung, die eine unverwechselbare Kodierung für den Entscheidungspunkt liefert. Die Einrichtung zur Kodierungserfassung am Fahrzeug erfaßt diese Kodierung bei der Annäherung an diesen Entscheidungspunkt und die Steuerung des Fahrzeugs steuert das Fahrzeug so, daß es dem als Vorzugsweg von dem Entscheidungspunkt zur gewählten Haltestelle festgelegten Weg folgt.

Im Ausführungsbeispiel umfassen die Kodierungselemente verschieden gepolte Magnete, die an den gekennzeichneten Punkten im Boden eingelassen sind. Jedes Kodierungselement umfaßt zwei, drei oder vier Magnete mit Nord- oder Südpolarität. Zur Bestimmung der unverwechselbaren Kodierung jeder Position werden die Magnete in einer, zwei oder mehr Reihen in einer vorgewählten Position angeordnet. Insbesondere hat jede Reihe vier Magnetpositionen, die einen Magneten mit Nord- oder Südpolung aufnehmen können. Dadurch werden 8 Leitungsnummern definiert. Verschiedene Kodierungsarten sind möglich zur Identifizierung von Stationen, Abzweigungspunkten, Einmündungspunkten usw. Die Kodierung an einer bestimmten Stelle kann einen Magneten mit einem Nordpol in Reihe 1, Position 1 enthalten sowie ein weiteres Magnet mit einem Nordpol in Reihe 2, Position 1.

Im allgemeinen bildet jedes Kodierungselement eine unverwechselbare Kodierung, die die Position des Elementes identifiziert und die Bewegungen des Fahrzeugs bewirkt, z. B.: Einmünden oder Abzweigen, Übergang zu Ausweichstrecken usw. Die Sensoren zur Erfassung der Bodenkodierung durch die Magnetelemente enthalten vier Reed-Schalterpaare, die so nebeneinander in Abständen angeordnet sind, daß sie von lediglich einem Magnet in einer Reihe beeinflußt werden.

Folgeblatt 1

Jeder Reed-Schalter enthält Öffner, die unter dem Einfluß der Magnete beim Überfahren des Fahrzeugs betätigt werden und dazugehörige Stromkreise öffnen. Dadurch wird eine Reihe von kodierten Signalen, die der Kodierung der magnetischen Kodierungselemente entsprechen, über acht Sensorausgangsleitungen geliefert.

Die oben beschriebene Einrichtung zur Positionsidentifizierung liefert in einer relativ einfachen Art und Weise Informationen zum Leiten des Fahrzeuges unter Verwendung von Magnetsätzen, die an vorgewählten Stellen entlang des Leitweges im Boden eingelassen sind. Aus Platzgründen ist die Anzahl der anzuwendenden Magnete begrenzt und somit die Anzahl der verfügbaren unverwechselbaren Kodierungen. Desweiteren ist es schwierig, die Kodierungselemente zur Abänderung der Kodierung umzuprogrammieren, wenn die Magnetsätze einmal im Boden eingelassen sind. Dies schränkt die Wirksamkeit des Systems ein, insbesondere im Hinblick auf die Erweiterung des Systems durch neue Haltestellen oder Nebenwege.

ZUSAMMENFASSUNG DER ERFINDUNG

Die vorliegende Erfindung betrifft eine Einrichtung für ein Fahrzeugleitsystem zur Informationsübermittlung an ein Fahrzeug, um dessen Bewegungen entlang des Fahrzeugnetzes zu steuern. In Übereinstimmung mit der Erfindung umfaßt die Einrichtung ein Abfrageelement am Fahrzeug, Beantwortungselemente für jede Haltestelle einschließlich eines Kodierungselementes zur Kodierung eines Signals zur Darstellung von Informationen über die dazugehörige Haltestelle, Kopplungselemente zur Kopplung von Signalen des Abfrage- und Beantwortungselementes, wenn das Fahrzeug bei seiner Fahrt entlang des Fahrweges das Beantwortungselement passiert, das Beantwortungselement einschließlich Kopplungsmodulatorelement, das auf das kodierte Signal zur Veränderung der Signalkopplung zwischem dem Abfrage- und dem Beantwortungselement reagiert, gemäß der Information vom Kodierungselement, das Abfrageelement einschließlich Erfassungselement zur Erfassung der Abänderung der Signalkopplung, um die durch das kodierte Signal dargestellten Informationen zu erfassen.

In Übereinstimmung mit einem Aspekt der Erfindung umfaßt das Kopplungselement eine Spule am Fahrzeug sowie eine zweite Spule, die zum Beantwortungselement gehört und am Fahrweg des Fahrzeugs angebracht ist, um eine Signalkopplung zwischen der ersten und zweiten Spule zu schaffen, wenn das Fahrzeug das Beantwortungselement passiert, das Kopplungsmodulatorelement, das die Abänderung der Signalkopplung gemäß der Information vom Kodierungselement bewirkt. Die erste Spule wird durch ein Frequenzsignal erregt, so daß die Abänderung der Signalkopplung eine Modulation des Frequenzsignals zur Folge hat, mit Hilfe dessen die kodierte Information vom Erfassungselement für die Fahrzeugsteuerschaltkreise erfaßt wird.

Die Beantwortungselemente sind entlang des Fahrweges an verschiedenen Stellen angebracht, einschließlich an jeder Haltestelle, an Entscheidungspunkten, die gelieferten Informationen beinhalten eine unverwechselbare Identifizierungskodierung für jeden Punkt. Die Kodierungen werden vom Abfrageelement am Fahrzeug erfaßt, wenn dieses ein Beantwortungselement passiert. Somit kann der Steuerschaltkreis am Fahrzeug den Standort des Fahrzeugs entlang des Fahrwegnetzes bestimmen und erhält Informationen zur Leitung des Fahrzeuges auf dem kürzesten Weg zur vorgewählten Haltestelle sowie zum Halten des Fahrzeuges an dieser Haltestelle.

Folgeblatt **1**

In Übereinstimmung mit einem Merkmal der Erfindung beinhaltet die Einrichtung zur Identifizierungskodierung ein passives Kodierungsbeantwortungselement für jeden zu identifizierenden Punkt. Jedes Beantwortungselement erhält sowohl eine Taktung als auch Gleichstrom aus dem Signal vom Abfrageelement am Fahrzeug. Wenn ein Fahrzeug ein Beantwortungselement passiert, wird vom Identifiziersignalgeber ein Impulskodiersignal erzeugt, das einen Schaltkreis aktiviert, der abwechselnd die Spule des Beantwortungselements aktiviert und deaktiviert. Die Reaktion der ersten Spule am Fahrzeug auf die Tätigkeit des Transformators ergibt eine Einhüllende an der Spannung der ersten Spule. Die Modulation ergibt die Kodierung des Beantwortungselementes, dieses Signal wird erfaßt, vom Trägersignal getrennt und verarbeitet, zur Erzeugung einer Identifizierungskodierung am Ausgang der Fahrzeugsensorschaltungen.

In Übereinstimmung mit einem weiteren Merkmal der Erfindung ist das Signalerzeugungselement des Beantwortungselementes mit Hilfe von manuell einstellbaren Schaltern programmierbar. Dadurch kann das Beantwortungselement nach Belieben neu programmiert werden. Desweiteren ist – wie bereits angedeutet – das Beantwortungselement ein passives Gerät, das seinen Strom vom Abfragesignal der Steuerschaltungen am Fahrzeug erhält. Somit wird keine Energie benötigt, um das im Boden eingelassene Beantwortungselement unter Strom zu halten.

BESCHREIBUNG DER ZEICHNUNGEN

Abbildung 1 ist ein vereinfachter Streckenplan und zeigt das Streckennetz für das Leitsystem einschließlich der Einrichtung zur Standortidentifizierung der vorliegenden Erfindung;

Abbildung 2 ist ein Blockdiagramm der Standortidentifizierungsschaltungen der vorliegenden Erfindung;

Abbildung 3 zeigt eine Draufsicht eines Fahrzeugs, wie es im Leitsystem verwendet werden kann;

Abbildung 4 und 4A sind ein schematisches Schaltkreis-Teilblockdiagramm der Fahrzeugabfrage der Standortidentifizierungsschaltungen gemäß Abbildung 2;

Abbildung 5 ist ein schematisches Schaltkreis-Teilblockdiagramm der Beantwortungsschaltung der Standortidentifizierungsschaltungen;

BESCHREIBUNG DER BEVORZUGTEN AUSFÜHRUNG

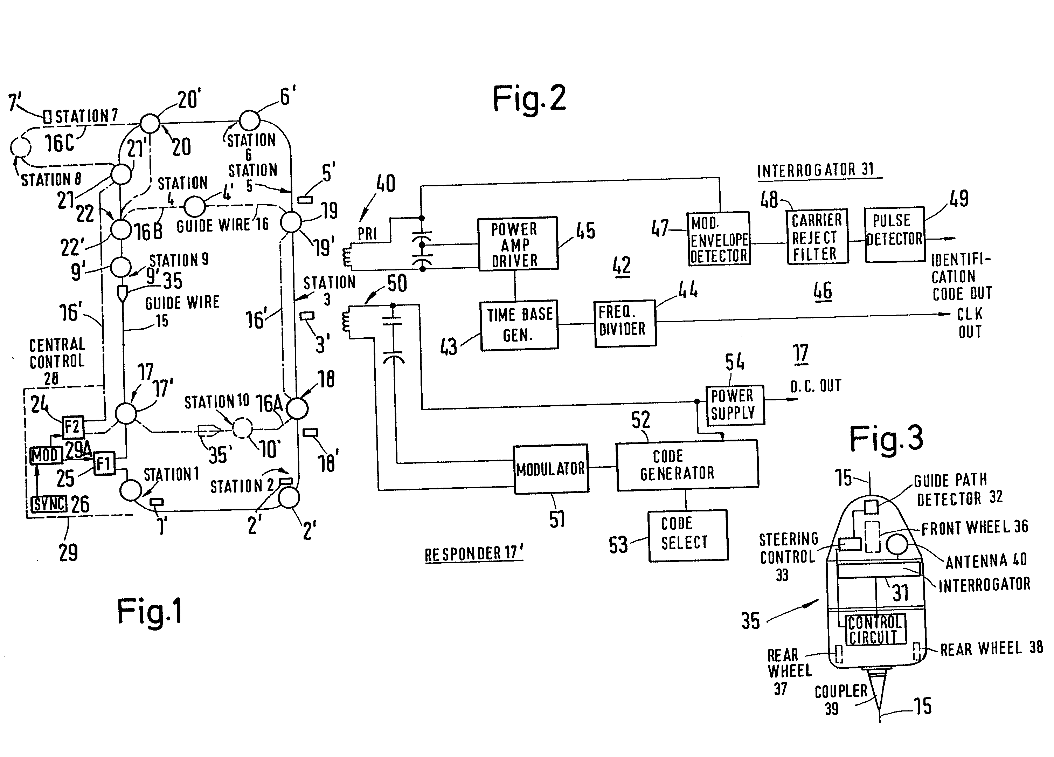

Die Einrichtung zur Standortidentifizierung der vorliegenden Erfindung wird in bezug auf die Anwendung in einem Fahrzeugleitsystem wie in dem oben angeführten U.S. Patent 4,284,160 offenbart, beschrieben, auf dieses Patent wird im folgenden Bezug genommen. Wie in diesem Patent ausführlicher beschrieben, besteht die Streckenführung – wie vereinfacht in Abbildung 1 aufgezeigt – im allgemeinen aus 2 Leitdrähten 15 und 16, die in einem bestimmten Muster als Hauptfahrweg und Nebenstrecken zur Führung der fahrerlosen Fahrzeuge 35, 35' usw. entlang der Streckenführung verlegt sind. Der Hauptfahrweg wird durch den als durchgezogene Linie dargestellten Leitdraht 15 bestimmt, der eine geschlossene Schleife bildet, die von einem Oszillator 25 einer zentralen Steuereinheit 28 mit einem Signal mit der ersten Frequenz f1 gespeist wird. Der andere Leitdraht 16 bestimmt drei Nebenstrecken, die als unterbrochene Linie dargestellt und mit 16A - 16C bezeichnet sind.

Folgeblatt 3

Die Nebenstrecken schneiden den Hauptfahrweg an den Punkten 17 - 22 und sind untereinander durch Leitungen 16' verbunden, die als strichpunktierte Linie dargestellt sind und eine weitere Schleife, die von einem Oszillator 24 der zentralen Steuereinh t 28 mit einem Signal mit der zweiten Frequenz f2 gespeist wird. L : zentrale Steuereinheit 28 synchronisiert ebenfalls den Betrieb der Steuerschaltkreise aller Fahrzeuge durch ein Synchronisiersignal, das von Generator 29 erzeugt wird.

Abbildung 3 zeigt eine Draufsicht eines Fahrzeuges 35, das einem von Leitdraht 15 ausgestrahlten Signalen bestimmten bestimmten Kurs folgt. Ein solches Fahrzeug kann ein gelenktes vorderes Antriebsrad 36, ein linkes und rechtes Hinterrad 37 bzw. 38 und eine am Ende des Fahrzeugs montierte Kupplung 39 aufweisen. Das Fahrzeug 35 beinhaltet ferner einen Leitdraht Sensor 32, der auf die über den Leitdraht 15 übertragenen Signale mit der Frequenz f1 reagiert. Dieser Sensor gibt Steuerausgangssignale an eine Lenksteuereinheit 33, die über die Steuerung des Vorderrades das Fahrzeug auf dem Fahrkurs hält, der durch den Leiter 15 bestimmt ist. Die Lenksteuereinheit empfängt ebenfalls Signale von der Steuereinheit 30 für das Fahrzeug 35, die auf Standortidentifizierungsdaten reagiert, von einem Kodiersender oder dem Abfrageelement 31 sowie Kodierelementen oder Beantwortungselementen im Boden entlang des Fahrweges, die auf die Position des Fahrzeuges im Streckensystem hinweisen. Die Art der Erzeugung der Identifizierungskodierungsdaten wird im folgenden beschrieben. Der Fahrzeugsteuerkreis und die Art der Anwendung der Standortidentifizierungsdaten werden in U.S. Patent 4,284,160 beschrieben. Ein Leitdrahtsensor und die entsprechende Lenksteuerung werden in US-Patent 3,009,525 offenbart und demzufolge hier nicht im einzelnen beschrieben. Das vorliegende System beinhaltet die Führung an Einmündungen, Abzweigungen sowie Blockstrecken,wie sie im U.S. Patent 4,284,160 beschrieben wird. Bei Verlegung des Systems werden "Entscheidungspunkte" sowie "Haltepunkte" definiert. An diesen Stellen werden Beantwortungselemente vorgesehen. Zur Steuerung des Verkehrsflusses werden diese Entscheidungspunkte und Haltepunkte eingesetzt, um Blockstrecken zu definieren, falls notwendig werden zusätzliche Beantwortungselemente nur für Blockstrecken eingesetzt.

In Abbildung 1 sind eine Reihe typischer Haltestellen und Punkte im Streckensystem mit den Ziffern 1 - 10 bezeichnet. Nach Erhalt der Anweisung, zu einer bestimmten Haltestelle zu fahren, wählt der Steuerschaltkreis 30 die kürzeste Route zu der Haltestelle. Die Punkte, an denen die Nebenstrecken vom Hauptweg abzweigen werden "Entscheidungspunkte" genannt. Wenn ein Fahrzeug sich auf dem Wege zu einer vorgewählten Haltestelle einem dieser Punkte nähert, entscheiden die Steuerschaltkreise im Fahrzeug, ob das Fahrzeug auf dem Hauptfahrweg weiterfährt oder ob es abbiegt und dabei die Vorzugsroute bzw. kürzeste Strecke zur Haltestelle kreuzt. Die Einmündungspunkte 21 und 22 zeigen an, wo die Nebenstrecke in den Hauptweg einmündet. Der Steuerschaltkreis 30 beinhaltet ein Programmierwerk mit dazugehörigen Wahlschaltern, die von einer Bedienperson am Ausgangshaltepunkt des Fahrzeugs von Hand betätigt werden, um das Fahrzeug "anzuweisen", zu einer vorgewählten Haltestelle zu fahren und dort anzuhalten und dabei die kürzeste Route zu der bestimmten Haltestelle zu nehmen.

Die Einrichtung zur Standortidentifizierung dieser Erfindung ermöglicht es dem Steuerschaltkreis 30, den Standort des Fahrzeugs entlang des Fahrweges zu bestimmen. An verschiedenen Punkten entlang des Fahrweges sind Beantwortungselemente vorgesehen, einschließlich an den Haltestationen 1 - 10 und den Punkten 17 - 22, an denen die Nebenstrecken 16A - 16C in Hauptweg 15 kreuzen.

Folgeblatt 4

Jedes Beantwortungselement wird mit der gleichen Bezugsziffer wie sein Punkt bezeichnet, jedoch mit einem Strich versehen. So wird das Beantwortungselement für Punkt 1 mit 1' bezeichnet, das für Punkt 17 mit 17' usw. Allgemein gesehen, erzeugt jedes Beantwortungselement eine unverwechselbare Kodierung, die von einem Abfrageelement 31 (Abbildung 3) am Fahrzeug erfaßt oder gelesen wird, während sich das Fahrzeug entlang der Fahrstrecke bewegt.

Das Abfrageelement erfaßt die Kodierung des Beantwortungselementes während das Fahrzeug an den Beantwortungselementen vorbeifährt und liefert Standortidentifizierungsdaten für den Fahrzeugsteuerschaltkreis 30, damit dieser bestimmen kann, wann das Fahrzeug an Entscheidungspunkten ankommt und um geeignete Befehle zu erzeugen, zur Steuerung der Bewegung des Fahrzeugs sowie um auf die Kodierung der Haltestation zu reagieren, die das Ziel des Fahrzeuges ist und das Fahrzeug dort anzuhalten.

Jedes Beantwortungselement bildet eine unverwechselbare Kodierung, die den Standort des Elementes bezeichnet. In einigen Fällen werden auch Informationen für den Fahrzeugsteuerschaltkreis 30 zur Steuerung der Fahrzeugbewegung gegeben, so z. B.: Identifizierung von Einmündungs- und Abzweigungspunkten, Verfügbarkeit von Ausweichstrecken sowie Anweisungen zur Änderung der Frequenz, um in eine Ausweichstrecke einzufahren oder auf den Hauptweg zurückzukehren.

In Abbildung 2 umfaßt das Abfrageelement 31 eine Treiberstufe 42 einschließlich eines Taktgebers 43, einen Frequenzteiler 44 und einen Treiberschaltkreis 45, der eine Antenne oder Spule 40 treibt. Die Spule 40 befindet sich im vorderen Teil des Fahrzeugs – wie in Abbildung 3 aufgezeigt – ca. 1 Zoll oberhalb des Bodens. Des weiteren umfaßt das Abfrageelement 31 eine Erfassungsstufe 46 einschließlich eines Erfassungselementes 47 für die Einhüllende, einen Trägerabstand Filter 48 und einen Impulserfasser 49.

Jedes Beantwortungselement wie z. B. Beantwortungselement 17' in Abbildung 2 enthält eine Spule 50, die an den Ausgang eines Modulators 51 angeschlossen ist, der wiederum von einem Impulskodiergeber 42 mit den dazugehörigen Kodierwahlschaltern 53 angetrieben wird. Beantwortungselement 17' enthält außerdem einen Frequenzteilerschaltkreis 54 und einen Stromversorgungsschaltkreis 54.

Der Treiberschaltkreis 45 des Abfrageelementes 31 erzeugt ein Hochfrequenzssignal mit einer vom Taktgeber 43 gesetzten Spannung und bringt dieses Signal an der Spule 40 an. In der vorliegenden Ausführung wird Spule 40 von einem 70 kHz Signal aktiviert. Während das Fahrzeug entlang der Fahrstrecke fährt und sich dem Standort eines Beantwortungselementes nähert, kommt es zu einer Signalkopplung zwischen den Spulen 40 und 50. Das Hochfrequenzssignal wird mit der Spule des Beantwortungselementes gekoppelt und vom Stromversorgungsschaltkreis 54 erfaßt, der aus diesem Signal Gleichstromspannung für den Modulator 51 mit den Impulskodiergeber 52 des Beantwortungselementes bezieht. Des weiteren erhält der Kodiergeber 52 eine Taktung für die Beantwortungsschaltkreise aus dem Hochfrequenzsignal, das mit Spule 50 gekoppelt ist.

Der Kodiergeber 52 erzeugt ein Signal, das binär kodiert wird, gemäß der vom Kodierwahlschaltkreis 53 angezeigten Kodierung, wobei die Kodierung den Standort am Boden des Beantwortungselementes 17' darstellt.

Folgeblatt 6

Im Ausführungsbeispiel werden die Identifizierungskodierdaten dem Abfrageelement in Form von zwei Sechs-Bit Segmenten übertragen, vorangehend jeweils ein zwei-Bit-Kopfteil und folgend ein Paritätsbit zur Synchronisierung und zur Sicherheit. Die Beantwortungselemente können im Boden eingelassen sein, der Kodierwahlschaltkreis 53 sollte für eine Neuprogrammierung des Beantwortungselementes leicht zugänglich sein. Der Kodierwahlschaltkreis 53 des Beantwortungselementes kann fernbedient eingestellt werden, mit Hilfe von Drähten (nicht gezeigt), die vom Beantwortungselement ausgehen. Die Spule des Beantwortungselementes ist so angebracht, daß eine Signalkopplung zwischen den Spulen des Abfrage- und Beantwortungselementes möglich ist, wenn das Fahrzeug dieses Element passiert.

Das seriell kodierte Signal wird am Modulatorschaltkreis 51 angebracht, der die Induktionswirkung zwischen den beiden Wicklungen variiert, z. B. durch Aktivieren oder Deaktivieren der Spule 50 gemäß der Kodierung des Signals. Im Ausführungsbeispiel deaktiviert der Modulatorschaltkreis 51 die Spule 50 für jede Logik eins, wobei die primäre Wicklung 40 entladen wird, im Vergleich zu jeder Logik null, d. h. der normalen Ladung, wenn die Spule 50 aktiviert ist. Die Induktionswirkung an der primären Spule 40, die mit dem Abfrageelement 31 zusammenhängt, mit der sekundären Wicklung 50 ergibt eine Einhüllende an der primären Spulenspannung, die die Kodierung des Beantwortungselementpaketes im Boden darstellt, d. h. die Modulation des 70 kHz Signals vom Abfrageelement mit Identifizierungsdaten. Die Modulation wird vom Einhüllende Umfassungselement erfaßt und vom Trägersignal durch den Trägerabschirmfilter 48 getrennt, dann weitergegeben an den Impulserfasserschaltkreis 49, der die Identifizierungskodierung in Binärform am Ausgang liefert. Das binär kodierte Signal wird von den entsprechenden Paritäts- und Sicherheitsprüfschaltkreisen verarbeitet und an den Eingang des Fahrzeugsteuerschaltkreises weitergeleitet. Hier werden zwei Sechs-Bit Wörter der Kodierung des Beantwortungselementes 17' im Boden geliefert.

## DETAILIERTE BESCHREIBUNG

### ABFRAGESCHALTKREIS

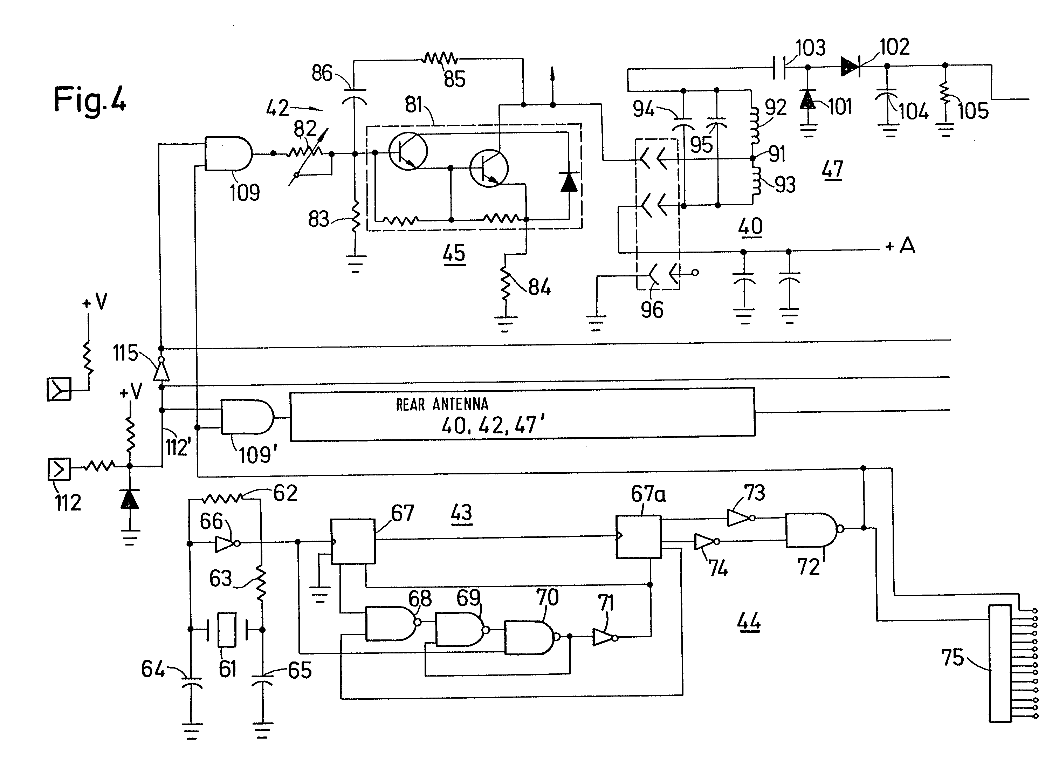

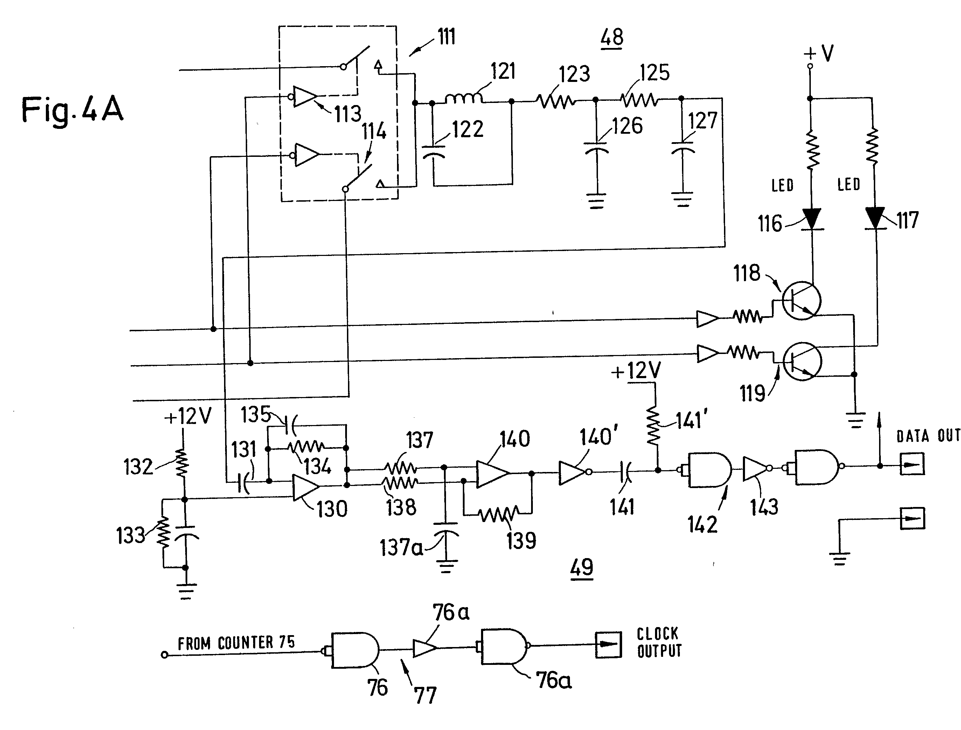

Bei Abbildung 4 und 4A hat der Abfragetaktgeber 43 eine konventionelle Konstruktion. Er enthält einen Kristalloszillator, bestehend aus dem Kristall 61, den Widerstandselementen 62 und 63, den Kondensatoren 64 und 65 und einem Wechselrichter 66, die zur Lieferung eines Signals bei 3,58 mHz miteinander verbunden sind.

Dieses Signal wird aufgeteilt vom Frequenzteiler 43, der zur Erzeugung eines Taktsignals durch 51 teilt. Der Frequenzteiler umfaßt ein Paar Dezimalzähler 67 und 67a, die NAND-Gatter 68 - 70 und den Wechselrichter 71. Diese Teile sind miteinander verbunden, um auf die Ausgänge der Dezimalzähler 67 und 67a zu reagieren und ein Signal zum "Zurücksetzen" auf null zu erzeugen, jedesmal wenn die Zahl 51 erreicht ist. Die Ausgänge des Dezimalzählers 67a werden von NAND-Gatter 72 und den Wechselrichtern 73 und 74 zur Erzeugung eines Signals bei 70 kHz kombiniert. Dieses Taktsignal bei 70 kHz gelangt an den Treiberschaltkreis 42 und treibt Spule 40 an. Dieses Signal kann ebenfalls verwendet werden, um Taktsignale für andere Schaltkreise des Fahrzeugsteuerkreises 30 zu erhalten, wobei ein zwölfstufiger Zähler 75, das 70 kHz Signal bei weniger als 70 kHz zählen kann. Das Ausgangstaktsignal wird zum Fahrzeugsteuerkreis 30 über eine Schnittstelle mit den Wechselrichtern 76, 76a, dem Pegelumsetzer 76a und dem Leitungstreiber-Schaltkreis 77 geleitet.

Folgeblatt

Der Stromtreiberschaltkreis 45 enthält eine Darlington-Leistungstransistorenstufe 81. Diese Transistorstufe wird bei 70 kHz vom Taktsignal getrieben, das zur Basis des Transistorschaltkreises durch den variablen Widerstand 82, der gemeinsam mit einem Widerstand 83 - die zwischen der Basis des Transistors 81 angeschlossen und geerdet sind - einen Spannungsteiler zur variablen Pegelregulierung für das Eingangssignal zur Transistorstufe liefert. Der Emitter des Transistors 81 ist durch Widerstand 84 geerdet, der Kollektor ist an Spule 40 angeschlossen. Eine Rückkopplungsschaltung mit einem Widerstand 85 und einem Kondensator 86 ist zwischen dem Kollektor und der Basis des Transistors 81 angeschlossen.

Das System hat einen kleinen Bereich, so daß der Standort des Beantwortungselementes im Boden identifiziert wird, wenn das Fahrzeug in einem Abstand von wenigen Zoll vorbeifährt. Dementsprechend ist der Strom des Treibersignals, das zur primären Spule 40 geliefert wird, ausreichend zur sicheren Erfassung jedes Beantwortungselementes, wenn das Fahrzeug dieses passiert.

Spule oder Antenne 40 umfaßt mehrere Windungen des Drahtes Nummer 20 mit einem Mittenanzapfungspunkt 91, der an den Ausgang des Leistungsverstärkers 45 angeschlossen ist. Die Spule ist auf einem geeigneten zylindrischen Körper mit einer Breite von ca. drei Zoll aufgewickelt, wobei Windung 92 über Windung 93 gewickelt ist. Die Kondensatoren 94 und 95 dienen dazu, die Spulen in Reihe zu aktivieren. Wie aufgezeigt, befindet sich die Spule unterhalb des Fahrzeuges in der Nähe eines Fahrzeugendes. Die Spule ist an den Eingang des Sensorschaltkreises durch ein abgeschirmtes Kabel angeschlossen. Die Enden der Spulenwicklungen sind an eine Klemmenleiste 96 angeschlossen, die an die Leiter eines abgeschirmten Drei-Leiter-Kabels angeschlossen ist. Der Mittenanzapfungspunkt 91 ist an den Ausgang des Stromtreiberschaltkreises 42 angeschlossen. Ein Windungsende 93 ist an eine Spannungsquelle +A angeschlossen, ein Wicklungsende 92 ist an den Eingang des Erfasserschaltkreises 47 für die Einhüllende angeschlossen.

Der Erfasserschaltkreis 47 enthält ein Diodenpaar 101 und 102, das als Spitzengleichrichterschaltkreis verbunden ist, der das Antennensignal, das durch den Kondensator 103 mit dem Erfasserschaltkreis 47 gekoppelt ist, empfängt und dabei das niederfrequente Modulationssignal vom 70 kHz Träger trennt. Ein Kondensator 104 und ein Widerstand 105 sind über die Ausgänge des Erfasserschaltkreises 47 für die Einhüllende angeschlossen, zur Schaffung einer Zeitkonstanten zur maximalen Entfernung des 70 kHz Trägers ohne Verlust des Gleichstrompegels, der dem Kodiersignal entspricht.

Im Ausführungsbeispiel ist die Spule 40 am vorderen Teil des Fahrzeuges angebracht und sie erfaßt so die Beantwortungselemente, wenn das Fahrzeug vorbeifährt. Antenne 40' am Fahrzeugende und der dazugehörige Leistungsverstärker-Treiberschaltkreis 42' ermöglichen die Erfassung der Beantwortungselemente im Boden zu dem Zeitpunkt, an dem das hintere Ende des Fahrzeugs die Beantwortungselemente passiert. Es wird darauf hingewiesen, daß zusätzlich zur Anbringung vorne (bzw. hinten) die Spule 40 seitlich angebracht werden kann, zur Erfassung von Beantwortungselementen, die neben der Fahrstrecke angebracht sind. Die Wahl der vorderen oder hinteren (seitlichen) Antenne erfolgt über einen Analogschalter, der aktiviert wird, um den Ausgang des Erfasserschaltkreises 47 für die Vorderantenne oder Erfasserschaltkreis 47' für die Hinter- (seitliche) Antenne mit dem Eingang des Trägerabschirmfilters 48 zu verbinden.

Die Aktivierung des Analogschalters 111 wird von einem Aktivierungssignal, das über Eingang 112 vom Fahrzeugsteuerschaltkreis 30 und Leiter
112' geliefert wird, gesteuert. Dieses Signal aktiviert ebenfalls AND-
Gatter 109 oder AND-Gatter 109', um das 70 kHz Treibersignal zum Leistungstreiberschaltkreis 45 zu leiten. Ein Niederpegelsignal am Eingang 112 aktiviert Gatter 109 und Schaltgerät 113, zum Anschluß des
Ausgangs des Erfasserschaltkreises 47 an den Eingang des Trägerabschirmfilters 48. Zusätzlich deaktiviert das von Wechselrichter 115
invertierte Eingangssignal den Schalter 114 und koppelt so den Erfasser 47' vom Trägerabschirmfilter 48 ab. Wenn der Eingang an Klemme 112
hoch ist, wird Schalter 113 deaktiviert und Schalter 114 aktiviert,
so daß das von der Hinterantenne 40' erfaßte Signal an den Trägerabschirmfilter 48 weitergegeben wird.

Ein Anzeigeschaltkreis am Fahrzeug, bestehend aus einem LED-Paar 116
und 117 und den dazugehörigen Treiberschaltkreisen 118 und 119 zeigt
den Status des Analogschalters 111 an und somit, ob Antenne 40 oder
40' aktiviert ist.

Der Trägerabschirmfilter 48 enthält eine Tiefpaßfilterstufe, die aus
Induktionsspule 121 und Kondensator 122 besteht und so als parallele
Falle für den 70 kHz Träger dient. Die Kondensatoren 126 und 127 bilden
Glättungsstufen, um Welligkeit auszuschalten. Widerstand 125 isoliert
Kondensator 126 von Kondensator 127.

Der Ausgang des Trägerabschirmfilters 48 wird weitergegeben an den
Impulserfasserschaltkreis 49, der Begrenzung und Slicing durchführt,
und das binär kodierte Datenwort am Ausgang rekonstruiert. Der Impulserfasserschaltkreis 49 enthält einen Differenzierschaltkreis, der aus einem
Operationsverstärker 130 besteht, dessen invertierender Eingang über
Kondensator 131 mit dem Ausgang des Filterschaltkreises 48 gekoppelt
ist und dessen nicht invertierender Eingang an einen Referenzschaltkreis angeschlossen ist, mit den Widerständen 132 und 133, dieser
liefert eine Vorspannungsreferenz am nicht invertierenden Eingang des
Verstärkers 130. Ein Rückkopplungsnetz, bestehend aus Widerstand 134 und
Kondensator 135 wird vom Ausgang des Verstärkers 130 an seinen
invertierenden Eingang angeschlossen. Der Ausgang des Verstärkers 130
wird ebenfalls über einen Widerstand 137 an den invertierenden Eingang
eines weiteren Operationsverstärkers und über einen Widerstand 138 an den
nicht invertierenden Eingang des Verstärkers 140 angeschlossen, der als
Slice-Schaltung dient. Verstärker 140 besitzt ein Zeitkonstantennetz,
bestehend aus Widerstand 137 und Kondensator 137a, das an einen Eingang
angeschlossen ist, um dem durchschnittlichen Gleichstrompegel zum
Verstärker 140 zu folgen. Widerstand 139 liefert eine positive
Rückkopplung zum anderen Eingang und erzeugt so ein Hysterese-Effekt
und verhindert, daß der Verstärker 140 auf geringfügige Variierungen im
Eingangssignal reagiert.

Die serielle Impulsfolge, die am Ausgang des Verstärkers 140 geliefert
wird, wird über einen Pufferkreis 142 an einen Schnittstellenschaltkreis mit einem Leitungstreiberschaltkreis 143 gegeben, der den digitalen Impulsausgang des Impulserfasserschaltkreises 49 weiterleitet
an einen Paritäts- und Sicherheitsprüfschaltkreis (nicht abgebildet),
bevor der Sechs-Bit-Datenteil im Speicherschaltkreis des Steuerschaltkreises 30 gespeichert wird. Wie in U.S. Patent 4,280,164 beschrieben,
enthält die Sensoreingangsschaltung zwei Acht-Bit Speicher. Diese Anordnung kann umgestellt werden, um eine Schnittstelle für die Identifikationskodiereinrichtung der vorliegenden Erfindung zu bilden, in-

Folgeblatt 8

dem ein Sechs-Bit Wort im Speicher Reihe eins und das andere Sechs-Bit Wort im Speicher Reihe zwei gespeichert werden. Wie für jeden Experten in diesem Fachbereich ersichtlich, können andere Schnittstellenanordnungen durchgeführt werden.

## BEANTWORTUNGSSCHALTKREISE

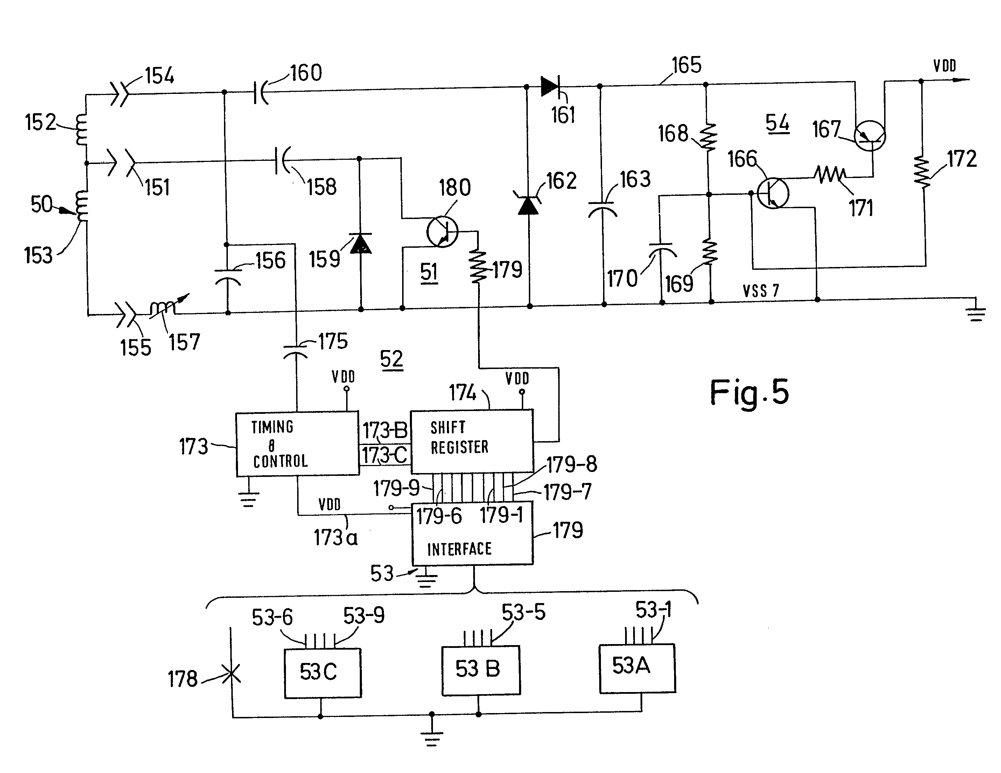

Bezugnehmend auf Abbildung 5 enthält die Beantwortungsantenne oder Spule 50, vierzig Windungen des Drahtes Nummer 20, der auf einem zylindrischen Kern (nicht abgebildet) mit den Klemmen 154 und 155 aufgewickelt ist. Ein Anzapfungspunkt 151 definiert einen Abschnitt mit dreißig Windungen zwischen diesem Punkt und Klemme 155. Ein Kondensator 156 und eine Induktionsspule 157 sind zwischen den Klemmen 154 und 155 in Reihe verbunden, wobei die Induktionsspule variabel ist, um eine Feinabstimmung des Beantwortungsantennenschaltkreises zu ermöglichen. Der Anschluß des Kondensators 156 und der Induktionsspule 157 ist geerdet. Ein Kondensator 158 und eine Diode 159 sind in Reihe geschaltet, in einem Strompfad in einer Richtung von Erde zu Klemme 151. Klemme 154 ist über Kondensator 160 an den Eingang des Stromversorgungskreises 54 gekoppelt, der über die Spule 50 angeschlossen ist.

Der Stromversorgungsschaltkreis 54 enthält die Dioden 161 und 162, die die Spitzen des 70 kHz Signals gleichrichten und an die Windung 50 des Transponders am Fahrzeug gekoppelt sind. Eine Diode 162, d. h. eine Zener-Diode, die zwischen der Erdungsklemme und dem Anschluß von Kondensator 160 und Diode 161 angeschlossen ist, dient zur Begrenzung. Ein Kondensator 163, der zwischen der Kathode der Diode 161 am Leiter 165 angeschlossen und geerdet ist, glättet das nicht geglättete Gleichstromsignal, das an Leiter 165 geliefert wird. Dieses Gleichstromsignal wird an einen Spannungsschaltkreis aus Transistoren 166 und 167 geliefert.

Der unregulierte Gleichstrom wird an die Basis des Transistors 166 über die Widerstände 168 und 169 angebracht, die zwischen Leiter 165 angeschlossen und geerdet sind. Ein Kondensator 170, der parallel mit Widerstand 169 geschaltet ist, dient als Filter für das Eingangssignal. Der Emitter des Transitors 166 ist geerdet, der Kollektor ist über Widerstand 171 an die Basis des Transistors 167 angeschlossen, dessen Emitter an Leiter 165 und dessen Kollektor über den positiven Rückkopplungswiderstand 172 an die Basis des Transistors 166 angeschlossen sind. Die Transistoren 166 und 167 sind komplementär und sind zusammengeschaltet als Niederpegel Schmitt-Trigger-Schaltung, die das Gleichstromsignal an Leiter 165 an den Leiter VDD am Kollektor des Transistors 167 weitergibt, um den Impulskodiergeber und den Modulationsschaltkreis des Beantwortungselementes zu aktivieren. Die positive Rückkopplung über Widerstand 172 liefert eine Hysterese-Abschaltung für den Schalter und verhindert so eine Abschaltung des Stroms von Leiter VDD wegen geringfügiger Pegelveränderungen im Eingangssignal aufgrund von Geräuschen, jedoch mit der Möglichkeit eines "Schlagartigen Abschaltens" des Stromes zur Leitung VDD, wenn der Eingangsstrom unter einen bestimmten Pegel fällt. Der Kodiergeberschaltkreis 52 enthält einen Takt- und Steuerschaltkreis 173 und ein parallel/seriell Schieberegister. Der Takt- und Steuerschaltkreis 173 unterteilt das Hochfrequenzsignal zur Erzeugung einer Taktung für den Kodiergeberschaltkreis 52 sowie Signale zur Steuerung der Ausgabe der Identifizierungskodierung, die vom Kodierungswahlschaltkreis 53 geliefert wird.

Der Kodierwahlschaltkreis 53 enthält drei Schalter 53A, 53B und 53C, einen Schalter 178 sowie einen Schnittstellenschaltkreis 179. Die Schalter 53A - 53C liefern Ausgänge an zwölf Ausgangsleitungen 53-1 bis 53-12 zu Eingängen am Schnittstellenschaltkreis 179, der Ausgänge an sechs Ausgangsleitungen 179-1 bis 179-6 zu den Eingängen des Schieberegisters 174 liefert. Die Schalter 53A-53C können von Hand betätigt werden, um so die gewünschte unverwechselbare Identifizierungs- und Informationskodierung für den Standort des Beantwortungselementes zu liefern.

Wie oben aufgezeigt, besteht die Identifizierungskodierung aus einem Sechs-Bit Datenwort mit einem vorangestellten Anfangsbit und einem Identifizierungsbit sowie einem nachgestellten Paritätsbit. Das Schieberegister 174 ermöglicht sechs Stufen, wobei jeweils eine den Ausgangsleitungen 179-1 bis 179-6 entspricht und drei zusätzlichen Stufen zur Speicherung des Anfangsbits, des Identifizierungsbits und des Paritätsbits. Das Anfangsbit ist eine "Markierung" oder ein Logik 1 Bit. Das Identifizierungsbit ist ein Logik 1 Bit für das erste der zwei Datensegmente und ein Logik 0 Bit für das zweite Segment. Das Paritätsbit ist ein Logik 1 Bit oder ein Logik 0 bit, das durch Setzen des Schalters 178 bestimmt wird. Nach der Übertragung der zwei Datensegmente wird die Abfolge wiederholt, wobei das Identifizierungsbit zu einer Logik 1 geladen wird für das erste Segment der folgenden Übertragung.

Der Schnittstellenschaltkreis 179 multiplext die zwölf Schaltleitungen 53-1 bis 53-12, jeweils sechs zu den parallelen Eingängen des Schieberegisters 174 unter der Steuerung von Taktsignalen vom Takt- und Steuerschaltkreis 173 an Leitung 173a. Dieser Schaltkreis liefert ein Blocksignal auf Leitung 173b, um das Schieberegister 174 mit den sechs Datenbits von den Leitungen 179-1 bis 179-6 zusammen mit dem Startbit, dem Identifizierungsbit und dem Paritätsbit über Leitungen 179-7 bis 179-9 zu laden, an die ein Spannungsniveau gemäß den gewünschten logischen Pegeln angebracht wird. Der Takt- und Steuerschaltkreis 173 liefert ebenfalls Taktimpulse auf Leitung 173C, um eine serielle Ausgabe des Schieberegisters 174 zu erzeugen. Der Takt- und Steuerschaltkreis 173 steuert den Schnittstellenschaltkreis 179 zur Auswahl des Datenausgabesatzes sowie des Status des Identifizierungsbits für jede Datensegmentübertragung.

Zusammenfassend reagiert der Kodiergeberschaltkreis 52 auf das an ihn gekoppelte Hochfrequenzsignal zur Erzeugung von zwei Datenworten mit jeweils sechs Datenbits mit einem vorangehenden Startbit und einem Identifizierungsbit sowie einem nachfolgenden Paritätsbit. Das Datenwort für jede Datensegmentübertragung wird als serielle Impulsfolge am Ausgang des Kodiergeberschaltkreises 52 geliefert. Jede serielle Impulsfolge wird durch Widerstand 179 an die Basis des Transistors 180 gekoppelt, die den Modulationsschaltkreis 51 enthält. Der Emitter-Kollektorenschaltkreis des Transistors 180 ist über die Diode 159 angeschlossen. Somit ist der Ausgangsschaltkreis des Transistors 180 angeschlossen zum Nebenschließen der Diode 159, wenn der Transistor 180 leitet, damit der Kondensator 158 entladen kann und so die Spule 50 durch die zusätzliche Kapazität im Spulenschaltkreis deaktiviert wird.

Transistor 180 wird als Reaktion auf jede "Markierung" oder auf jedes Logik 1 Pegelsignal der seriellen Impulsfolge, die vom Impulskodiergeberschaltkreis 52 geliefert wird, angeschaltet. Dementsprechend wird für jedes Logik 1 Pegelbit der Kondensator 158 mit dem dreißig Windungsteil 153 der sekundären Wicklung 50 verbunden.

Dadurch wird Wicklung 50 deaktiviert, wobei die primäre Wicklung 40 entladen wird, daraus ergibt sich ein kurzfristiger Anstieg in der Amplitude des Trägersignals über der primären Wicklung 40. Die Dauer des Amplitudenanstiegs entspricht der Dauer des den Transistor 180 treibenden Datenimpulses.

## BETRIEB DER ERFASSENSEINRICHTUNG FÜR DIE IDENTIFIZIERUNGSKODIERUNG

Die Verwendung der erfaßten Kodierung für Fahrzeugkommandos wird im oben angeführten U.S. Patent 4,284,160 ausführlich beschrieben, deshalb beschränkt sich die folgende Betriebsbeschreibung auf die Erfassung der Identifizierungskodierung.

In den Abbildungen 1 und 2 wird zur Veranschaulichung des Betriebes des Abfrage- und Beantwortungselementes davon ausgegangen, daß sich Fahrzeug 35 zwischen Station 9 und Station 1 entlang des durch Leitdraht 15 definierten Weges bewegt und sich Abzweigungspunkt 17 nähert, der durch Kodiergerät 17' identifiziert wird. Es wird angenommen, daß die Vorderantennenspule 40 zu diesem Zeitpunkt aktiviert ist und der Treiberschaltkreis 43 fortlaufend ein 70 kHz Signal erzeugt, so daß die Vorderantennenspule 40 bei 70 kHz aktiviert wird.

In Abbildung 5 wird das aktivierte Signal, das von der Vorderantennenspule 40 erzeugt wird, an die Spule 50 des Beantwortungsschaltkreises 17' gekoppelt. Das Hochfrequenzsignal, das durch Kondensator 160 an den Stromversorgungsschaltkreis 54 gekoppelt ist, wird von Diode 161 gleichgerichtet. Das sich daraus ergebende Gleichstromsignal lädt Kondensator 163 und erhält einen Gleichstrompegel aufrecht, solange wie das Hochfrequenzsignal zu Spule 50 geliefert wird. Kondensator 163 speichert ausreichend Energie, um die Gleichstromversorgung für den Schaltkreis aufrecht zu halten, während der Transistor 180 des Deaktivierungsschalters 51 aktiviert wird. Das nicht geglättete Gleichstromsignal auf Leitung 165 wird von Kondensator 163 geglättet und über Transistor 167 an den Kodiergeberschaltkreis 52 des Beantwortungselementes geliefert.

Das an Spule 50 gekoppelte Hochfrequenzsignal wird von Kondensator 175 gekoppelt und vom Takt- und Steuerschaltkreis 173 unterteilt, so wird ein Taktsignal erzeugt, durch das der Schnittstellenschaltkreis 179 die vier Schalter von 53A gelieferten Bits und die zwei ersten von Schalter 53B gelieferten Bits über die Leitungen 179-1 bis 179-6 zu den Eingängen des parallel geladenen Schieberegisters 174 schleusen kann. Die Ausgänge an den Leitungen 179-7 bis 179-9, einschließlich der Startbits, das Identifizierungsbit und das Paritätsbit werden ebenfalls an weitere Eingänge des parallel geladenen Schieberegisters 174 weitergeleitet.

Ein weiteres vom Takt- und Steuerschaltkreis 173 erzeugtes Taktsignal wird an das parallel geladene Schieberegister 174 als ein Ladebefehl weitergeleitet, die Daten auf den Leitungen 179-1 bis 179-9 parallel in das Schieberegister 174 zu laden.

Der Takt- und Steuerschaltkreis 173 erzeugt mit einer auswählbaren Rate Taktimpulse zum Schieberegister 174 zur Erzeugung einer seriellen Ausgabe der darin gespeicherten Daten.

Folgeblatt 11

0159680

Nachdem alle Bits des ersten Übertragungssegmentes aus dem Schieberegister 174 geschleust sind, setzt der Takt- und Steuerschaltkreis den
Schnittstellenschaltkreis 179 neu und ändert den Status des Identifizierungsbits über Leitung 179-8 und leitet die zwei letzten Bits von
Schalter 53B und die vier Bits von Schalter 53C über Leitungen 179-1
bis 179-6 weiter an die Eingänge des Schieberegisters 174 zusammen mit
dem Startbit, dem modifizierten Identifizierungsbit und dem Paritätsbit, zur Vorbereitung der Ausgabe des zweiten Datensegmentes gemäß der
Ausgabe des ersten Datensegmentes.

In Abbildung 5 wird die serielle Datenausgabe des Schieberegisters 174
während des ersten Übertragungssegmentes weitergeleitet an die Basis
des Transistors 180 des Modulationsschaltkreises 51. Jedes Logik 1 Bit
der Ausgangsimpulsfolge verursacht das Leiten des Transistors 180,
wobei Kondensator 158 über den dreißig Windungsabschnitt 153 der Wicklung 50 in Kreis geschaltet wird und so die Wicklung deaktiviert. Der
Transistor 180 bleibt nicht leitend bei jedem Logik 0 Pegel der Datenfolge.

In Abbildung 4 und 4A ergibt die Induktivwirkung zwischen Spule 50 und
Spule 40, wenn der schaltende Transistor 180 auf die Logik 1 Bits der
Ausgangsimpulskodierung während jeder Segmentübertragung reagiert und
eine Modulation der primären Spulenspannung erzeugt, eine Darstellung
der Kodierung des Bodenpaketes. Das modulierte Signal, das über Antenne
40 entsteht, wird mit Erfasser 47 gekoppelt.

Die Gleichrichter-Dioden 101 und 102 empfangen das an den Erfasserschaltkreis 47 gekoppelte Antennensignal über Kondensator 103 und
trennen das niederfrequente Modulationssignal vom 70 kHz Träger.
Kondensator 104 und Widerstand 105 schaffen eine Zeitkonstante zur
maximalen Entfernung des 70 kHz Trägers ohne Verlust des Gleichstrompegels, der der Beantwortungskodierung entspricht.

Das sich daraus ergebende Signal wird über Analogschalter 113 an den
Trägerabschirmfilter 48 weitergeleitet, der aus der Induktionsspule
121 und den Kondensatoren 122 und 123 besteht und den 70 kHz Träger
abfängt. Die Kondensatoren 126 und 127 bilden eine Glättungsstufe, um
Welligkeit auszuschalten.

Der Ausgang des Trägerabschirmfilters 48 wird an den Impulserfasserschaltkreis 49 weitergeleitet, der Begrenzung und Slicing durchführt
und am Ausgang das binär kodierte Datenwort wieder herstellt.

Die serielle Impulsfolge am Verstärker 140 wird über den Pufferkreis
142 und den Leitungstreiberschaltkreis 143, der eine Schnittstelle
zwischen dem Impulserfasserschaltkreis 49 und dem Paritäts- und Sicherheitsschaltkreis (nicht abgebildet) bildet, weitergeleitet, bevor
die verifizierten Daten in einem Speicher abgespeichert werden. Wie
in U.S. Patent 4,280,164 beschrieben, umfaßt der Sensoreingangsschaltkreis zwei Acht-Bit Speicher. Diese Einrichtung kann so abgeändert werden, daß sie eine Schnittstelle mit der Identifizierungs-
Kodiereinrichtung der vorliegenden Erfindung bildet, in dem ein
Sechs-Bit Datenwort im Speicher Reihe eins und das andere Sechs-Bit
Datenwort in Speicher Reihe zwei gespeichert wird. Wie jedem Experten
klar ersichtlich ist, sind andere Schnittstellenanordnungen möglich.

Eine Datenausgabesequenz erfolgt solange, bis sich das Fahrzeug in der
Nähe des Beantwortungselementes 17' befindet und eine ausreichende
Kopplung zwischen der primären Wicklung 40 am Fahrzeug und Spule 50
der im Boden eingelassenen Beantwortungseinheit besteht.

Folgeblatt 12

ANSPRÜCHE:

1. In einem Leitsystem zum Leiten von mindestens einem Fahrzeug entlang eines Streckensystems, eine Einrichtung zur Informationsübermittlung an jedes Fahrzeug, zur Steuerung seiner Bewegungen im Streckensystem, wobei die Einrichtung beinhaltet: ein Abfrageelement am Fahrzeug, ein Beantwortungselement für jeden Standort, einschließlich einem Kodierungselement zur Lieferung eines ko- dierten Signals, für Informationen des dazugehörigen Standortes, einem Kopplungselement, mit dem die Signale vom Abfrageelement und dem Beantwortungselement gekoppelt werden können, wenn das Fahrzeug entlang dem Streckensystem fährt und das Beantwortungselement passiert, wobei dieses Beantwortungselement eine Kopplungsmodulationseinheit enthält, die auf das kodierte Signal reagiert und die Signalkopplung zwischem dem Abfrageelement und dem Beantwortungselement variiert, gemäß der Information vom Ko- dierungselement, wobei das Abfrageelement ein Erfassungselement zur Erfassung der Variierung der Signalkopplung zur Erfassung der durch das kodierte Signal dargestellten Information enthält.

2. Ein Leitsystem wie in Anspruch 1 dargelegt, in dem das besagte Kopplungselement eine erste Spule am Fahrzeug und eine zweite Spule enthält, die zum besagten Beantwortungselement gehört und am Fahrweg des Fahrzeuges angebracht ist, um eine Signalkopplung zwischen der ersten und zweiten Spule zu ermöglichen, wenn das Fahrzeug das Beantwortungselement passiert.

3. Ein Leitsystem wie in Anspruch 2 dargelegt, in dem besagtes Abfrageelement fünf Treiberelemente beinhaltet zur Anbringung eines Frequenzsignals an besagte erste Spule, wobei das Kopplungsmodulationselement die zweite Spule steuert, um die Signalkopplung zwischen den besagten Spulen zu variieren und eine Modulation des besagten Frequenzsignals mit der Information des Kodierungselementes zu erzeugen.

4. Ein Leitsystem wie in Anspruch 3 dargelegt, in dem· besagtes Beantwortungselement eine Last an die erste Spule anbringt, wenn eine Signalkopplung zwischen den Spulen erzeugt wird, wobei das Kopplungsmodulationselement die Last an der Spule variiert und somit eine Modulation des Frequenzsignals ergibt, gemäß der vom Kodierelement gelieferten Information.

5. Ein Leitsystem wie in Anspruch 3 dargelegt, in dem besagtes Kopplungsmodulationselement auf das kodierte Signal reagiert, um die zweite Spule abwechselnd zu aktivieren oder zu deaktivieren gemäß der vom Kodierelement gelieferten Information, wobei die Induktionswirkung zwischen den Spulen variiert, wenn die zweite Spule aktiviert und deaktiviert wird, daraus ergibt sich eine Modulation des Frequenzsignales mit der Information des Kodierungselementes.

6. In einem Leitsystem zum Leiten von mindestens einem Fahrzeug in einem Streckensystem, eine Identifizierungseinrichtung zur Iden- tifizierung von Standorten in einem Streckensystem und eine Ein- richtung zur Richtungsweisung in einem Streckensystem, wobei diese Einrichtung umfaßt: ein Abfrageelement am Fahrzeug mit einer ersten Spule, Treiberschaltkreiselemente und Signalerfassungselemente, ein Beantwortungselement für jede Haltestelle mit einem Identifizierungssignalgeber, Modulationselement und einer zweiten Spule, wobei die zweite Spule am Fahrweg des Fahrzeuges angebracht ist, um eine Signalkopplung zwischen der ersten und zweiten Spule zu erzeugen, wenn das Fahrzeug besagtes Beantwortungselement auf seiner Fahrt passiert, wobei besagtes Treiberschaltkreiselement ein Frequenzsignal erzeugt, das Frequenzsignal an besagte erste Spule koppelt, und das Identifizierungssignalgeberelement ein kodiertes Signal erzeugt, das eine Identifizierungskodierung für die dazugehörige Haltestelle darstellt, und das Modulationselement auf das kodierte Signal reagiert, um das an die erste Spule gekoppelte Frequenzsignal mit der Informationskodierung zu modulieren, und das besagte Erfassungselement, das zur Erfassung des modulierten Signals an besagte erste Spule gekoppelt ist, um die Identifizierungskodierung aus dem modulierten Frequenzsignal zu erfassen.

7. Ein Leitsystem wie in Anspruch 6 dargelegt, in dem besagter Beantwortungselement eine Last an besagter erster Spule anbringt, wenn eine Signalkopplung zwischen der ersten und der zweiten Spule erzeugt wird, wobei das Modulationselement auf das kodierte Signal reagiert, um die Last an besagter ersten Spule zu variieren und so das Frequenzsignal gemäß dem Identifizierungssignal zu modulieren.

8. Ein Leitsystem wie in Anspruch 6 dargelegt, in dem besagtes Beantwortungselement außerdem ein Element enthält zur Erfassung des besagten Frequenzsignals und sich daraus ergebenden Erzeugung eines Gleichstromsignals zur Aktivierung des besagten Identifizierungssignalsgebers und des besagten Modulationselementes.

9. Ein Leitsystem wie in Anspruch 6 dargelegt, in dem besagter Identifizierungssignalgeber ein Zeitelement enthält, zur Schaffung einer Zeitachse aus besagtem Frequenzsignal zur Steuerung des Identifizierungssignalgebers bei der Erzeugung des besagten kodierten Signals.

10. Ein Leitsystem wie in Anspruch 6 dargelegt, in dem besagter Identifizierungssignalgeber ein Kodierungsausfallelement enthält, um Daten, die die Informationskodierung für den besagten Identifizierungssignalgeber darstellen, zu liefern, wobei dieses Kodierungswahlelement zur Änderung der Identifizierungskodierung geregelt werden kann.

11. Ein Leitsystem wie in Anspruch 10 dargelegt, in dem die Identifizierungskodierung zunächst Daten umfaßt, die die Haltestelle identifizieren und dann Daten, die über die Konfiguration des Streckensystems in der Nähe der Haltestelle Aufschluß geben.

12. In einem Leitsystem zum Leiten von mindestens einem Fahrzeug in einem Streckensystem, eine Positionsidentifizierungseinrichtung zur Positionsidentifizierung in einem Streckensystem und einer Einrichtung zur Richtungssteuerung jedes Fahrzeugs im Streckensystem, wobei diese Einrichtung umfaßt: ein Abfrageelement am Fahrzeug mit einer ersten Spule, einem Treiberschaltkreiselement und einem Signalerfassungselement; Beantwortungselemente für jede Haltestelle mit einem Identifizierungssignalgeber, einem Modulationselement und einer zweiten Spule, wobei besagte zweite Spule am Fahrweg des Fahrzeuges angebracht ist, um eine Signalkopplung zwischen der ersten und zweiten Spule zu ermöglichen, wenn das Fahrzeug bei seiner Fahrt im Streckensystem das Beantwortungselement passiert, wobei besagtes Treiberschaltungselement ein

Folgeblatt 14

Frequenzsignal erzeugt und das Frequenzsignal an besagte erste Spule koppelt, besagter Identifizierungsgeber ein kodiertes Signal zur Darstellung einer Identifizierungskodierung für die dazugehörige Blockstrecke erzeugt, und besagtes Modulationselement an besagte zweite Spule angeschlossen ist und auf das kodierte Signal reagiert, um die Last an der ersten Spule gemäß der Informationskodierung zu variieren, wobei die Induktionswirkung zwischen besagter ersten und zweiten Spule bei Variierung der Last an besagter ersten Spule eine Modulation des Frequenzsignals mit der Informationskodierung erzeugt, und besagtes Signalerfassungselement an besagte erste Spule zur Erfassung des modulierten Signals gekoppelt ist, um die Identifizierungskodierung aus dem modulierten Frequenzsignal zu erfassen.

13. Ein Leitsystem wie in Anspruch 12 dargelegt, in dem besagter Identifizierungssignalgeber ein Kodierungselement umfaßt, das einen Satz von Signalen liefert, der die Identifizierungskodierung darstellt und wobei der Kodiersignalgeber auf besagten Signalsatz reagiert und eine Folge von binär kodierten Impulsen erzeugt, die die Identifizierungskodierung darstellen, wobei besagtes Modulationselement besagte erste Spule abwechselnd aktiviert und deaktiviert, gemäß der Informationskodierung, die von besagtem Kodierungssignalgeber geliefert wird.

14. Ein Leitsystem wie in Anspruch 13 dargelegt, wobei besagtes Kodierungselement zur Änderung der Identifikationskodierungsdaten regelbar ist.

15. Ein Leitsystem wie in Anspruch 14 dargelegt, in dem das Kodierungselement von Hand zu setzende Schaltelemente umfaßt, um besagten Satz von Ausgangssignalen zu erhalten.

16. Ein Leitsystem wie in Anspruch 12 dargelegt, in dem besagtes Modulationselement ein Deaktivierungselement enthält, das mit besagter zweiter Spule in Kreis geschaltet ist und auf besagtes kodiertes Signal reagiert, um besagte zweite Spule abwechselnd zu aktivieren und zu deaktivieren gemäß der Identifizierungskodierung.

17. Ein Leitsystem wie in Anspruch 16 dargelegt, in dem besagte zweite Spule eine Wicklung mit Vielfachwindungen und ersten und zweiten Enden und mindestens einem Abzapfungspunkt enthält, der einen ersten und einen zweiten Wicklungsteil definiert, wobei das Deaktivierungselement mit einem der besagten Wicklungsteile in Kreis geschaltet ist und zeitweise dazu dient, die Anzahl der Windungen eines Wicklungsteils zu reduzieren.

18. Ein Leitsystem wie in Anspruch 12 dargelegt, in dem besagtes Beantwortungselement eine Zeitgeberschaltung zur Erzeugung von Signalen zur zeitlichen Steuerung für den Identifizierungssignalgeber bei der Erzeugung des besagten kodierten Signals enthält.

19. Ein Leitsystem wie in Anspruch 18 dargelegt, in dem besagtes Beantwortungselement außerdem ein Stromschaltungselement enthält, das zur Erfassung des besagten Frequenzsignals an die besagte zweite Spule angeschlossen ist sowie zur Erzeugung eines Gleichstromsignals aus diesem Signal zur Aktivierung des Identifizierungssignalgebers sowie eine Zeitgeberschaltung und ein Modulationselement.

Folgeblatt 15

20. Ein Leitsystem wie in Anspruch 19 dargelegt, in dem der besagte Identifizierungskodierungsgeber ein Kodierauswahlelement enthält, das einen Satz von binär kodierten Ausgangssignalen liefert, die die Identifizierungsdaten und das Element darstellen, das auf die Signale zur zeitlichen Steuerung reagiert, die von besagter Zeitgeberschaltung zur Erzeugung von kodierten Signalen erzeugt werden.

21. In einem Leitsystem zum Leiten von mindestens einem Fahrzeug in einem Streckensystem, eine Einrichtung zur Haltestellenidentifizierung, um Haltestellen in einem Streckensystem zu identifizieren und· eine Einrichtung zur Richtungssteuerung des Fahrzeuges im Streckensystem, wobei diese Einrichtung umfaßt: ein Abfrageelement an jedem Fahrzeug, mit einer ersten Spule, einer Treiberschaltung zur Erzeugung eines Frequenzsignales sowie ein Element zur Kopplung des Frequenzsignals an besagte erste Spule; ein Beantwortungselement für jede Haltestelle mit einem Identifikationssignalgeber zur Erzeugung eines seriell kodierten Signals, das eine Identifizierungskodierung für jede dazugehörige Haltestelle· erzeugt sowie eine zweite Spule, die am Fahrweg des Fahrzeugs angebracht ist, um eine Signalkopplung zwischen der ersten und zweiten Spule zu ermöglichen, wenn das Fahrzeug auf dem Fahrweg das Beantwortungselement passiert; wobei besagtes Taktgeberelement, das an besagte zweite Spule gekoppelt ist und das auf besagtes Frequenzsignal zur Erzeugung einer Vielzahl von Signalen zur zeitlichen Steuerung des Identifikationssignalgebers bei der Erzeugung der besagten seriell erzeugten kodierten Signale reagiert, und ein an besagte zweite Spule gekoppeltes Element, das auf besagte seriell kodierten Signale reagiert, um die besagte zweite Spule, gemäß der Identifikationskodierung abwechselnd zu aktivieren und zu deaktivieren, wobei die Induktionswirkung zwischen der ersten und zweiten Spule bei Aktivierung und Deaktivierung der besagten zweiten Spule eine Modulation des Frequenzsignales mit der Identifikationskodierung ergibt; und das Abfrageelement außerdem ein Erfassungselement, das an besagte erste Spule gekoppelt ist, enthält, zur Erfassung des modulierten Signals, um die Identifikationskodierung aus dem modulierten Frequenzsignal zu erfassen.

22. Ein Leitsystem wie in Anspruch 21 dargelegt, in dem besagter Identifikationsgeber ein Kodierauswahlelement enthält, das einen Satz binär kodierter Ausgangssignale umfaßt, die die Identifikationskodierung darstellen, mit einem Parallel/Seriellwandlerelement, und einem Element, das auf das erste der Signale zur Zeitsteuerung reagiert, um den Satz von Ausgangssignalen in das Parallel/Seriellwandlerelement zu schleusen, wobei diese Ausgangssignale von diesem Wandlerelement ausgegeben werden als Reaktion auf weitere Signale zur Zeitsteuerung, so wird besagtes seriell kodierte Signal geliefert.

23. Ein Leitsystem wie in Anspruch 22 dargelegt, in dem besagtes Kodierungsauswahlelement ein von Hand einstellbares Schalterlement umfaßt, zur Erzeugung des besagten Satzes von binär kodierten Ausgangssignalen.

**Fig.2**

INTERROGATOR 31

PULSE DETECTOR → IDENTIFICATION CODE OUT — 49

CARRIER REJECT FILTER — 48

MOD. ENVELOPE DETECTOR — 47

POWER AMP DRIVER — 45

FREQ. DIVIDER — 44

TIME BASE GEN. — 43

42

46 — CLK OUT

PRI — 40

STATION 3

50

MODULATOR — 51

CODE GENERATOR — 52

CODE SELECT — 53

POWER SUPPLY — 54 → D.C. OUT

17

RESPONDER 17'

**Fig.3**

GUIDE PATH DETECTOR 32

FRONT WHEEL 36

ANTENNA 40

INTERROGATOR

31

CONTROL CIRCUIT

REAR WHEEL 38

STEERING CONTROL 33

35

REAR WHEEL 37

COUPLER 39

15

15

**Fig.1**

STATION 7 — 7'

STATION 6 — 6'

STATION 5 — 5'

16C

STATION 8

20 / 20'

21 / 21'

22 / 22'

STATION 4 — 4'

STATION 9 — 9'

GUIDE WIRE 16

16B

GUIDE WIRE 35

GUIDE WIRE 15

16'

5'

19 / 19'

STATION 3 — 3'

16'

STATION 10 — 16A

18 / 18'

10'

35'

STATION 2 — 2'

STATION 1 — 1'

17 / 17'

CENTRAL CONTROL 28

F2

MOD 29A

24

F1

25

SYNC 26

29

**Fig.4**

Fig.4A

Fig.5